# FASCICULE DE BREVET EUROPEEN

(11) **EP 2 096 031 B1**
(45) Date de publication et mention de la délivrance du brevet: **18.04.2012**
(21) Numéro de dépôt: 09002430.8
(22) Date de dépôt: 20.02.2009
(51) Int. Cl.: B64C 27/605

(54) **Hélicoptère muni d' une pluralité d' éléments sustentateurs pour commander l' incidence de ses pales**
Hubschrauber, der mit einer Vielzahl von Auftriebselementen zur Steuerung des Einfallwinkels seiner Blätter ausgestattet ist
Helicopter equipped with a plurality of lifting elements for controlling the angle of attack of its blades

(30) Priorité: 27.02.2008 FR 0801079
(43) Date de publication de la demande: 02.09.2009
(73) Titulaire: EUROCOPTER, 13725 Marignane (FR)
(72) Inventeur: Berthie, Pierre, 13480 Cabries (FR)
(74) Mandataire: GPI & Associés

(56) Documents cités:
- DE-A1- 2 409 227
- GB-A- 735 571
- US-A- 2 481 750
- US-A- 2 534 353
- US-A- 2 818 123

## Description

La présente invention concerne un hélicoptère muni d'une pluralité d'éléments sustentateurs pour commander l'incidence aérodynamique de ses pales. Par suite, cette invention se situe dans le domaine technique restreint des commandes de pas de pales d'hélicoptère.

En effet, un hélicoptère comporte communément un rotor principal de sustentation et de propulsion pourvu d'une pluralité de pales.

Les pales du rotor principal décrivent un cône très ouvert, dénommé « cône rotor » par l'homme du métier, dont le plan de rotation est perpendiculaire à la portance générale générée par ce rotor principal. Cette portance générale du rotor principal peut alors être décomposée en une force verticale de sustentation et une force horizontale qui assure la translation de l'hélicoptère.

Par suite, le rotor principal assure bien la sustentation et la propulsion de l'hélicoptère.

De plus, en contrôlant la forme et l'inclinaison du cône rotor par rapport au référentiel hélicoptère, un pilote peut diriger précisément l'hélicoptère.

Afin d'agir sur ce cône rotor, on tend à faire battre les pales de façon à modifier leur inclinaison par rapport au plan d'entraînement du rotor, ce plan d'entraînement étant perpendiculaire au mât du rotor.

Par suite, l'hélicoptère est pourvu de moyens spécifiques destinés à faire varier le pas de chaque pale, et par conséquent l'incidence aérodynamique de chaque pale par rapport au flux d'air incident traversé par la pale.

En faisant varier le pas d'une pale, on modifie la portance qu'elle génère ce qui a pour conséquence le battement de la pale.

Afin de contrôler la portance générale du rotor, en intensité et en direction, le pilote de l'hélicoptère agit donc généralement sur la valeur de l'angle de pas de chaque pale en commandant une rotation de la pale autour de son axe longitudinal de pas.

Ainsi, lorsque le pilote ordonne une variation collective de pas, c'est à dire une variation identique du pas de toutes les pales, ce pilote fait varier l'intensité de la portance générale du rotor principale de manière à contrôler l'altitude et la vitesse de l'hélicoptère.

A contrario, une variation de pas collectif est sans effet sur la direction de cette portance générale.

En effet, pour modifier la direction de la portance générale générée par le rotor, il convient d'incliner le cône rotor en réalisant une variation non pas collective mais cyclique de pas. Dans ce cas de figure, le pas d'une pale varie en fonction de son azimut et passe durant un tour complet d'une valeur maximale à une valeur minimale obtenues dans des azimuts opposés.

La variation cyclique du pas des pales est à l'origine d'une variation cyclique de la portance des pales et donc de l'inclinaison du cône rotor. En commandant la variation cyclique du pas des pales, le pilote contrôle l'assiette de l'aéronef et sa translation.

On connaît par le document US 2 534 353 un premier dispositif pour contrôler le pas des pales d'un hélicoptère.

Selon ce document, un rotor d'hélicoptère est muni de deux pales solidaires chacune d'un manchon fixé à un moyeu.

Le pilote commande le pas collectif des pales à l'aide d'un levier agissant sur une tige logée à l'intérieur du mât rotor. Cette tige répercute son mouvement sur une première et une deuxième bielles fixées au moyeu. En manoeuvrant le levier de commande de pas collectif, le pilote entraîne une translation de ladite tige ce qui génère une rotation du moyeu et donc des pales autour d'un axe de variation de pas.

Par ailleurs, le moyeu est solidarisé à un premier et un deuxième éléments sustentateurs agencés dans le plan des pales via un premier et deuxième arbres de liaison rigidement liés entre eux, l'axe longitudinal des éléments sustentateurs étant perpendiculaire aux axes longitudinaux des pales. Ces éléments sustentateurs sont dénommés « palette » par l'homme du métier.

Chaque arbre de liaison est en outre relié à un plateau de commande, dénommé plateau cyclique, via un compas. Plus précisément, le plateau cyclique comportant un plateau tournant et un plateau non tournant, les compas sont fixés sur le plateau tournant du plateau cyclique.

En outre, le plateau non tournant comporte une barre dont le pilote peut se saisir.

Pour contrôler le pas cyclique des pales, le pilote manoeuvre la barre pour incliner le plateau non tournant, et par suite le plateau tournant. L'inclinaison du plateau tournant est alors répercutée sur les premier et deuxième arbres de liaison via les compas ce qui permet de modifier le pas des éléments sustentateurs.

La portance générée par ces éléments sustentateurs varie donc ce qui entraine un battement de ces derniers et par voie de conséquence un basculement du moyeu.

Le moyeu s'inclinant, les deux pales verront leur propre pas modifié.

Ce premier dispositif est relativement simple mais impose la présence d'un plateau cyclique pénalisant d'un point de vue masse et aérodynamisme.

De plus, il implique la présence de deux sous-ensembles pour respectivement commander la variation collective de pas et la variation cyclique du pas des pales ce qui induit des masses importantes et augmente les risques de panne.

Enfin, les éléments sustentateurs sont censés faire varier cycliquement le pas des pales. Toutefois, ce n'est pas réellement le cas, du moins au sens strict, dans la mesure où les deux éléments sustentateurs agissent conjointement sur le moyeu et donc sur les deux pales de façon simultanée et identique.

En outre, on constate que les efforts à fournir par le pilote pour incliner les éléments sustentateurs, en agissant sur la barre du plateau non tournant sont parfois extrêmement importants.

Pour remédier à ce dernier inconvénient, on connaît un deuxième dispositif par le document US 2 818 123.

Désormais, les éléments sustentateurs sont chacun équipés d'un volet. Les compas agencés sur le plateau tournant n'entrainent pas la variation de pas des éléments sustentateurs mais l'inclinaison des volets par rapport à ces éléments sustenteurs.

En faisant varier l'inclinaison du volet, on modifie la portance de l'ensemble élément sustentateur/ volet et par suite le pas des pales.

L'effort à exercer par le pilote pour faire varier le pas des pales est alors amoindri par rapport au premier dispositif dans la mesure où la surface portante du volet est faible comparée à la surface portante de l'élément sustentateur.

Néanmoins, les inconvénients mentionnés précédemment demeurent. De plus, ces premier et deuxième dispositifs ne sont pas à priori applicables sur un hélicoptère comportant plus deux pales dans la mesure où le moyeu ne peut tourner autour d'un unique axe durant la variation cyclique de pas.

On connait, par le document DE 2409227, un troisième dispositif muni de deux éléments sustentateurs solidarisés aux extrémités d'un barreau unique traversant la tête d'un rotor.

Les commandes de pas, collectif et cyclique, du pilote sont reliées à trois servocommandes, via des bielles et des combinateurs ou encore des commandes électriques, solidarisées au plateau non tournant d'un plateau cyclique.

De plus, le plateau cyclique est lié mécaniquement à chaque pale par une bielle de commande de pas.

Lorsque le pilote souhaite modifier le pas collectif des pales, il agit sur une commande qui ordonne aux trois servocommandes de faire monter ou descendre l'ensemble du plateau cyclique, à savoir ces plateaux non tournant et tournant.

Les bielles de commande de pas sont alors toutes déplacées de la même distance ce qui implique que le pas de toutes les pales varie du même angle.

A contrario, pour faire varier le pas cyclique des pales afin de diriger l'hélicoptère dans une direction donnée, le pilote ordonne le déplacement d'une unique servocommande par exemple.

Le plateau cyclique ne se déplace par verticalement mais s'incline alors par rapport au mât du rotor. Chaque bielle de commande de pas se déplace selon une direction et une valeur qui lui est propre et il en va de même pour le pas de la pale associée.

La commande de pas est d'une certaine manière individualisée, contrairement au premier et deuxième dispositifs, puisque chaque pale est commandé par sa propre bielle de commande de pas.

Ce troisième dispositif est très efficace ce qui explique sa généralisation. Néanmoins, les efforts à fournir pour manoeuvrer les pales étant importants, particulièrement sur les hélicoptères de fort tonnage, les servocommandes et le plateau cyclique ont des masses et des dimensions importantes ce qui est très pénalisant.

De plus, leur présence tend à créer des perturbations aérodynamiques.

La présente invention a pour alors objet de proposer un hélicoptère permettant de s'affranchir des limitations mentionnées ci-dessus.

Ainsi, l'invention vise à obtenir un dispositif et un procédé de changement de pas des pales du rotor principal d'un l'hélicoptère qui soit à la fois léger et efficace en autorisant un parfait contrôle des pas collectif et cyclique des pales, quel que soit le nombre de pales du rotor.

Selon l'invention, un hélicoptère est muni d'un rotor principal comportant au moins deux pales, chaque pale étant pourvue d'un moyen de fixation à un moyeu du rotor. On note que le moyen de fixation de la pale au moyeu peut consister en un manchon solidarisé par des moyens usuels ou encore en un manchon faisant partie intégrante de la pale par exemple.

Cet hélicoptère est remarquable en ce qu'il est muni d'un élément sustentateur par pale, chaque élément sustentateur étant lié mécaniquement à une unique pale pour faire varier le pas de ladite unique pale à laquelle l'élément sustentateur est lié.

Le pas de chaque pale est donc commandé par un élément sustentateur lié à l'ancrage de la pale. Contrairement aux premier et deuxième dispositifs de l'art antérieur, chaque pale est donc bien commandée par son propre élément sustentateur.

Chaque élément sustentateur est alors géré de manière indépendante, fonctionnellement et mécaniquement, de manière à faire varier individuellement le pas d'une unique pale.

De plus, le système est opérationnel indépendamment du nombre de pales dans la mesure où les éléments sustentateurs ne doivent pas obligatoirement présenter une angulation de 90° avec les pales ou se situer dans le même plan que les pales. L'invention est applicable sur un hélicoptère comportant au moins deux pales et non pas uniquement deux pales ce qui constitue un avantage certain.

Par rapport au troisième dispositif de l'art antérieur, il est plus aisé de mouvoir un élément sustentateur de faibles dimensions plutôt qu'une pale relativement grande. De plus, l'effet aérodynamique généré par l'élément sustentateur permet de limiter les efforts à exercer.

Par ailleurs, l'invention peut comporter une ou plusieurs des caractéristiques additionnelles suivantes.

Chaque élément sustentateur étant lié mécaniquement à une pale, chaque élément sustentateur est avantageusement solidaire en rotation de la pale à laquelle il est mécaniquement lié autour d'un premier axe longitudinal de variation de pas de la pale.

En faisant battre un élément sustentateur, on génère une rotation de cet élément sustentateur, et par suite une rotation de la pale autour de son premier axe longitudinal.

L'élément sustentateur commande donc de manière directe le pas de la pale, et non pas via le moyeu du rotor par exemple.

Pour faire varier le pas collectif, on agit sur l'ensemble des éléments sustentateurs pour que ces éléments sustentateurs battent de manière identique, alors que pour faire varier le pas cycliquement, on individualise les actions.

Par conséquent, il est avantageux que chaque élément sustentateur soit lié mécaniquement à une unique pale par une liaison mécanique indépendante du moyeu du rotor, la liaison mécanique liant avantageusement l'élément sustentateur à une zone d'attache de la pale au moyeu, c'est à dire soit au moyen de fixation de la pale ou soit à un tronçon de la pale elle-même.

Ainsi, la liaison mécanique n'englobe pas le moyeu du rotor, contrairement aux premier et deuxième dispositifs de l'art antérieur pour lesquels chaque élément sustentateur est mécaniquement lié au moyeu et entraine le basculement de ce moyeu.

Plus précisément, chaque élément sustentateur étant lié mécaniquement à une unique pale par une liaison mécanique, cette liaison mécanique comporte éventuellement une cornière dont une première extrémité est solidarisée à la zone d'attache de la pale, plus précisément au moyen de fixation de la pale au moyeu ou à un tronçon de la pale elle même.

Selon une première et une deuxième variantes de l'agencement des éléments sustentateurs, chaque élément sustentateur est solidarisé en rotation autour de l'axe de battement dudit élément sustentateur à une deuxième extrémité de la cornière correspondante via une articulation permettant à l'élément sustentateur d'effectuer un mouvement rotatif autour d'un deuxième axe longitudinal de variation de pas de l'élément sustentateur.

Selon une troisième variante de l'agencement des éléments sustentateurs, une deuxième extrémité de chaque cornière est fixée par une biellette intermédiaire à l'élément sustentateur correspondant, plus précisément à l' articulation permettant à l'élément sustentateur d'effectuer un mouvement rotatif autour d'un deuxième axe longitudinal de variation de pas de l'élément sustentateur.

Selon les première et deuxième variantes, il est alors possible de fixer l'articulation de l'élément sustentateur à la deuxième extrémité de la cornière associée. De même, selon la troisième variante, on fixe l'articulation de l'élément sustentateur à la biellette intermédiaire.

Cependant, quelle que soit la variante de l'invention, il est avantageux de soutenir chaque élément sustentateur. L'articulation de chaque élément sustentateur est alors pourvue d'un moyen de soutien et d'une attache à trois degrés de liberté, le moyen de soutien étant solidarisé à l'élément sustentateur correspondant, l'attache à trois degrés de liberté étant fixée à une unité tournante comportant le mât du rotor et son moyeu ainsi que le moyen de fixation de la pale au moyeu du rotor.

Le moyen de soutien traverse alors la deuxième extrémité de la cornière de manière à permettre à l'élément sustentateur d'effectuer un mouvement rotatif autour de son deuxième axe longitudinal de variation de pas et d'entraîner en rotation la cornière autour de son axe de battement.

De plus, on note que l'attache à trois degrés de liberté, une butée sphérique par exemple, est dimensionnée pour minimiser la distance séparant l'axe de battement de l'élément sustentateur au premier axe longitudinal de variation de pas de la pale correspondante afin que ledit axe de battement et ledit premier axe longitudinal soient sensiblement confondus.

Selon la première variante et éventuellement selon la deuxième variante, l'attache à trois degrés de liberté sera donc fixée au moyeu du rotor alors que selon la troisième variante elle sera fixée au mât du rotor, ou à un organe prolongeant ledit mât.

Indépendamment de l'agencement des éléments sustentateurs, selon le procédé mis en oeuvre par l'invention, décrit par la suite, le pilote de l'hélicoptère va commencer par modifier le pas de l'élément sustentateur pour modifier la portance générée par cet élément sustentateur. Cette modification entraîne un battement de l'élément sustentateur qui monte ou descend selon le cas de manière à entrainer en rotation la pale à laquelle il est lié mécaniquement autour de son premier axe longitudinal.

On comprend que les efforts à appliquer pour mettre en rotation un élément sustentateur de faible dimension autour de son deuxième axe longitudinal sont nettement inférieurs aux efforts nécessaires pour mettre en rotation une pale autour de son premier axe longitudinal de variation de pas, en appliquant les techniques mises en oeuvre par le troisième dispositif de l'art antérieur par exemple.

Par conséquent, il devient possible de simplifier le système de changement de pas des pales. Malgré le surpoids provenant des éléments sustentateurs et de leur liaison mécanique, l'invention reste étonnamment avantageuse par rapport au troisième dispositif connu.

Selon une première variante de l'agencement des éléments sustentateurs, les pales étant contenues dans un premier plan lorsqu'elles ne battent pas, les éléments sustentateurs liés mécaniquement auxdites pales étant contenus dans un deuxième plan lorsqu'ils ne battent pas, les premier et deuxième plans sont confondus. Les premier et deuxième axes de variation de pas sont donc disposés dans un même plan.

En revanche, selon une deuxième et une troisième variantes de l'agencement des éléments sustentateurs, les premier et deuxième plans sont parallèles entre eux, un plan se trouvant au dessus de l'autre.

La première variante est intéressante par sa simplicité. Néanmoins, les deuxième et troisième variantes sont optimisées en fonction du besoin.

La deuxième variante consiste à décaler faiblement, de l'ordre de grandeur de l'épaisseur de l'élément sustentateur, les premier et deuxième plans, en inclinant la cornière liant l'élément sustentateur à la zone d'attache de la pale correspondante, dans le but d'annuler les effets de la pesanteur sur les éléments sustentateurs.

En effet, le poids des éléments sustentateurs tend à les faire battre dans la direction de la pesanteur. Ce battement est à même d'entraîner une rotation des pales qui n'aurait pas été requise par le pilote.

Or, de manière surprenante, lorsque le deuxième plan est légèrement situé sous le premier plan, on constate que les efforts centrifuges, exercés sur les éléments sustentateurs lorsque le rotor tourne, redressent ces éléments sustentateurs de manière à contrecarrer l'influence néfaste de leur poids.

La troisième variante consiste à décaler sensiblement, de l'ordre de grandeur de la corde des éléments sustentateurs, les premier et deuxième plans à l'aide de la biellette intermédiaire pour étendre l'application de l'invention à un rotor possédant n'importe quel nombre de pales.

De plus, cette troisième variante permet d'optimiser les caractéristiques aérodynamiques du rotor en éloignant les éléments sustentateurs de la zone perturbée de la tête rotor.

Par ailleurs, le rotor peut comporter de manière optionnelle un moyen de butée pour limiter le battement de chaque élément sustentateur.

Cette caractéristique garantit une certaine sécurité au système en empêchant que le battement des éléments sustentateurs soit trop important et par conséquent en limitant le pas des pales.

Ce moyen de butée est pourvu d'une plaque supérieure qui recouvre au moins partiellement une partie supérieure du moyeu du rotor, cette partie supérieure étant située du côté du moyeu opposé au fuselage de l'hélicoptère.

Selon une première version du moyen de butée, chaque élément sustentateur étant lié mécaniquement à une pale via successivement une articulation et une liaison mécanique, le moyen de butée comporte un limiteur de course par élément sustentateur. Chaque limiteur de course, un vérin par exemple, est alors agencé entre la plaque supérieure et chaque articulation pour limiter le battement de chaque élément sustentateur.

Le battement de chaque élément sustentateur est alors limité par la course du limiteur de course associé.

Selon une deuxième version du moyen de butée, ce moyen de butée est pourvu d'une plaque inférieure qui recouvre au moins partiellement une partie inférieure du moyeu du rotor, la partie inférieure étant située du côté du moyeu en regard du fuselage de l'hélicoptère.

Le battement de l'élément sustentateur, ou son articulation à la liaison mécanique le liant à une pale, est alors limité par les plaques inférieure ou supérieure. En cas de battement trop important, l'élément sustentateur ou son articulation rentre en contact avec la plaque supérieure ou inférieure ce qui stoppe son déplacement.

Eventuellement, les plaques supérieure et inférieure peuvent être munies localement de moyens amortissant pour éviter de dégrader l'élément sustentateur ou son articulation lorsque ces derniers sont en butée.

Quel que soit le mode de réalisation, l'hélicoptère comporte une biellette principale par élément sustentateur pour que le pilote puisse ajuster le pas de chaque élément sustentateur. Chaque biellette principale est alors articulée sur un point d'ancrage déporté d'un unique élément sustentateur pour commander le pas de l'élément sustentateur sur lequel la biellette principale est articulée.

On comprend que le point d'ancrage est déporté par rapport au deuxième axe longitudinal de variation de pas de l'élément sustentateur pour commander la mise en rotation de cet élément sustentateur.

Selon un premier mode de réalisation, le rotor principal comportant un plateau cyclique de commande de pas muni d'un plateau tournant et d'un plateau non tournant, chaque biellette principale est articulée sur le plateau tournant, et bien évidemment sur le point d'ancrage déporté de l'élément sustentateur.

Le pilote commande le plateau cyclique, via des servocommandes par exemple, pour faire varier le pas des éléments sustentateurs et par suite des pales.

A pale équivalente, les servocommandes de l'invention auront des dimensions et un poids réduits, par rapport aux servocommandes mises en oeuvre par le troisième dispositif connu.

Selon un deuxième mode de réalisation, le rotor principal comportant un plateau cyclique de commande de pas muni d'un plateau tournant et d'un plateau non tournant, ladite biellette principale est articulée sur une première branche d'un moyen de renvoi d'angle, en forme de L par exemple, solidarisé au moyeu du rotor. Une deuxième branche du moyen de renvoi est alors reliée au plateau tournant par une bielle secondaire, cette bielle secondaire étant de fait articulée sur le plateau tournant.

Il est à noter que la biellette principale est articulée soit sur la branche du moyen de renvoi la plus proche du fuselage de l'hélicoptère, soit sur la branche du moyen de renvoi la plus éloignée du fuselage.

Contrairement au premier mode de réalisation, le plateau tournant n'est pas relié directement à la biellette principale de chaque élément sustentateur.

En mettant en oeuvre le premier mode de réalisation, on constate que lorsque l'élément sustentateur bat vers le haut, son pas tend à décroitre si le point d'ancrage de l'élément sustentateur est agencé près du bord d'attaque de l'élément sustentateur.

A contrario, son pas va augmenter si le point d'ancrage de l'élément sustentateur est agencé près du bord de fuite de l'élément sustentateur, à savoir entre ledit bord de fuite et le deuxième axe longitudinal de variation de pas de l'élément sustentateur.

Ce couplage entre le pas et le battement de l'élément sustentateur a un effet stabilisant sur la réponse de l'élément sustentateur mais il réduit l'efficacité du système puisqu'il limite la réponse à un ordre de pilotage.

En variante du premier mode de réalisation, le point d'ancrage de la biellette principale sur l'élément sustentateur peut être déporté à l'arrière de ce dernier, près de son bord de fuite donc, pour obtenir un couplage pas/battement tendant à augmenter le battement lorsque le pas augmente. Un tel couplage tend à accroître l'efficacité du dispositif mais ce dernier risque de devenir instable si le couplage est excessif.

De manière inattendue, en mettant en oeuvre le deuxième mode de réalisation, le pas de l'élément sustentateur reste constant en cas de battement. En d'autres termes, ce deuxième mode de réalisation permet de supprimer le couplage pas /battement de l'élément sustentateur.

Ainsi, en utilisant soit le premier soit le deuxième mode de réalisation, il est possible d'introduire dans le dispositif n'importe quelle valeur de couplage pas/battement, et d'obtenir de la sorte la meilleure efficacité sans instabilité.

Selon un troisième mode de réalisation, l'hélicoptère comporte un actionneur, de type piézoélectrique par exemple, par biellette principale. Chaque biellette principale est alors commandée par un actionneur fixé au moyeu ou au mât du rotor.

Cet actionneur peut être alimenté électriquement via un collecteur électrique agencé sur un mât tournant du rotor. L'énergie électrique étant acheminée au moyen de câbles électriques depuis un générateur installé dans le fuselage de l'hélicoptère, le collecteur a pour fonction de transférer l'énergie depuis le repère fixe du fuselage vers le repère tournant du rotor.

Toutefois, il est avantageux de réaliser un générateur électrique à l'aide du mât tournant du rotor.

De façon usuelle, on dispose le stator du générateur électrique à l'intérieur du mât du rotor, le stator étant de plus rigidement lié au fond de la boite de transmission principale. L'organe tournant du générateur est alors rigidement lié au mât rotor.

Ainsi, la rotation du mât rotor permet au générateur de générer l'électricité nécessaire au bon fonctionnement des actionneurs des éléments sustentateurs.

Les commandes de vol du pilote envoient un signal électrique à un actionneur qui pousse ou tire une biellette principale pour faire varier le pas de l'élément sustentateur associé. Ces commandes peuvent être transmises par un moyen de transmission sans fil par ondes électromagnétiques dans les gammes radioélectriques, infrarouges, ou encore par hyperfréquences.

Ce troisième mode de réalisation ne nécessite donc pas l'implémentation d'un plateau cyclique.

La présente invention a aussi pour objet le procédé mis en oeuvre par l'hélicoptère revendiqué.

Selon l'invention, un procédé pour faire varier le pas d'une pale d'un rotor d'hélicoptère comportant au moins deux pales est remarquable en ce que, un élément sustentateur étant uniquement lié à ladite pale, on ajuste la portance générée par l'élément sustentateur afin que cet élément sustentateur batte pour entraîner en rotation la pale à laquelle il est lié autour d'un premier axe longitudinal de variation de pas de cette pale.

On remarquera que selon les premier et deuxième dispositifs de l'art antérieur utilisant deux éléments sustentateurs, les deux éléments sustentateurs agissent conjointement sur le moyeu du rotor qui entraine en rotation les deux pales. A contrario, selon le procédé de l'invention, on modifie la portance d'un élément sustentateur qui agit directement sur une unique pale.

Ainsi, on ajuste la portance de l'élément sustentateur en modifiant le pas de cet élément sustentateur et donc en faisant tourner l'élément sustentateur autour d'un deuxième axe longitudinal de variation de pas de l'élément sustentateur.

L'invention et ses avantages apparaîtront avec plus de détails dans le cadre de la description qui suit avec des exemples de réalisation donnés à titre illustratif en référence aux figures annexées qui représentent :
- la figure 1, une vue isométrique d'un premier mode de réalisation de l'invention ayant des éléments sustentateurs soutenus par le moyeu,
- la figure 2, une vue de côté d'une première forme du deuxième mode de réalisation de l'invention,
- la figure 3, une vue de côté d'une deuxième forme du deuxième mode de réalisation de l'invention,
- la figure 4, une vue de côté schématique d'un troisième mode de réalisation,
- la figure 5, une vue de côté d'une première version du moyen de butée,
- la figure 6, une vue de côté d'une deuxième version du moyen de butée,
- la figure 7, une vue de côté d'une première variante de l'agencement des éléments sustentateurs,
- la figure 8, une vue de côté d'une deuxième variante de l'agencement des éléments sustentateurs,
- la figure 9, une vue de côté d'une troisième variante de l'agencement des éléments sustentateurs, et
- la figure 10, une vue isométrique d'un premier mode de réalisation de l'invention n'ayant pas des éléments sustentateurs soutenus par le moyeu.

Les éléments présents dans plusieurs figures distinctes sont affectés d'une seule et même référence.

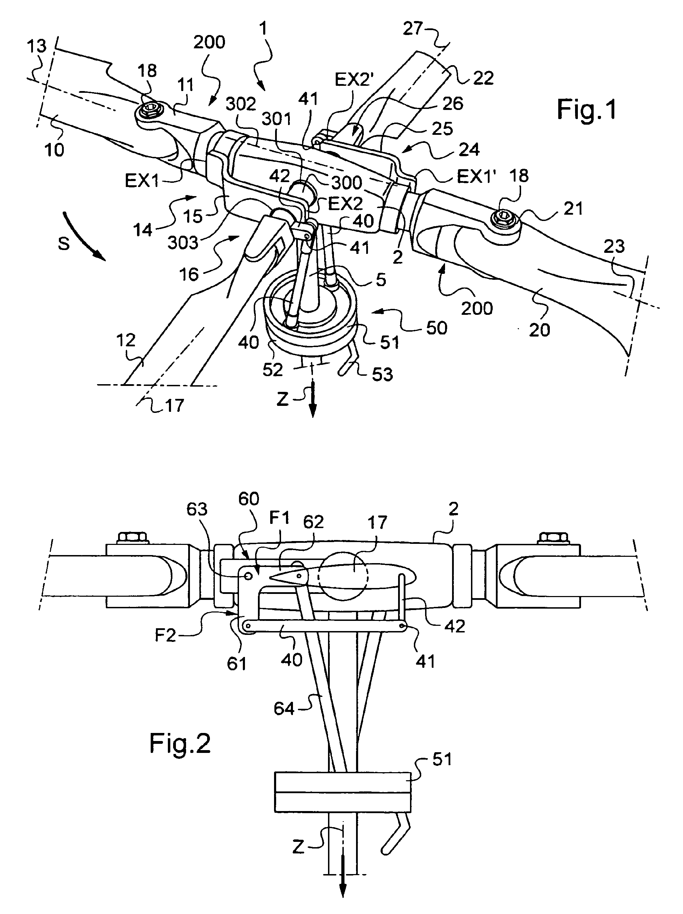

La figure 1 présente un rotor 1 d'hélicoptère. Ce rotor 1 est muni d'une première et d'une deuxième pales 10, 20 pourvues respectivement d'un premier et d'un deuxième moyens de fixation 11, 21 au moyeu 2 du rotor 1. Les moyens de fixation 11, 21 sont fixés au moyeu 2 par des moyens usuels non représentés, via des butées sphériques lamifiées par exemple, permettant entre autres à chaque pale 10, 20 de pivoter autour de son premier axe longitudinal 13, 23.

Sur les figures, les pales 10, 20 sont solidarisées à leur moyen de fixation 11, 21 par des broches 18. Néanmoins, les moyens de fixation peuvent faire partie intégrante des pales sans sortir du cadre de l'invention.

De plus, le rotor 1 comporte un élément sustentateur 12, 22 par pale, chaque élément sustentateur étant situé en amont de la pale associée par rapport au sens d'avancement S de ladite pale associée. Ainsi, un premier et un deuxième éléments sustentateurs 12 ,22 sont respectivement liés mécaniquement aux première et deuxième pales 10, 20 via une première et une deuxième liaisons mécaniques 14, 24. Plus précisément, les premier et deuxième éléments sustentateurs 12 ,22 sont respectivement liés aux moyens de fixation 11, 21 de la zone d'attache 200 des première et deuxième pales 10, 20.

Chaque liaison mécanique 14, 24 est pourvue d'une cornière 15, 25 coudée solidarisée par sa première extrémité EX1, EX1' à une pale 10, 20 et par sa deuxième extrémité EX2, EX2' à une articulation 16, 26 de l'élément sustentateur 12, 22 associé à ladite pale 10, 20. Grâce à cette articulation 16, 26, l'élément sustentateur est apte à réaliser un mouvement rotatif autour de son deuxième axe longitudinal 17, 27 de variation de pas.

Ainsi, une première extrémité EX1 de la première cornière 15 est alors solidarisée au premier moyen de fixation 11, par des vis non représentées par exemple, alors que la deuxième extrémité EX2 de cette première cornière 15 est solidaire de l'élément sustentateur 12 en rotation autour de l'axe de battement 302 de cet élément sustentateur 12 en étant reliée à une première articulation 16 du premier élément sustentateur 12. La première articulation 16 autorise alors le premier élément sustentateur 12 à effectuer une rotation autour de son deuxième axe longitudinal 17 de variation de pas.

De même, une première extrémité EX1' de la deuxième cornière 25 est solidarisée au deuxième moyen de fixation 21 alors que la deuxième extrémité EX2' de cette deuxième cornière 25 est solidaire de l'élément sustentateur 22 en rotation autour de l'axe de battement de cet élément sustentateur 22 en étant reliée à une deuxième articulation 26 du deuxième élément sustentateur 22. La deuxième articulation 26 autorise donc le deuxième élément sustentateur 22 à effectuer une rotation autour de son deuxième axe longitudinal 27 de variation de pas.

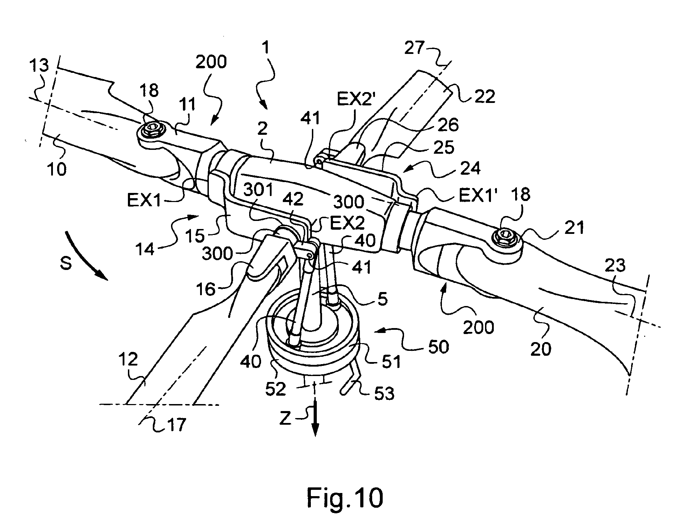

Les première et deuxième articulations 16, 26 pourraient ainsi être solidarisées aux deuxièmes extrémités EX2, EX2' des première et deuxième cornières 15, 25 comme le montre la figure 10.

Néanmoins, en référence à la figure 1, il est avantageux de soutenir chaque élément sustentateur 12, 22.

La première articulation 16 du premier élément sustentateur 12 est alors pourvue d'un moyen de soutien 300 et d'une attache à trois degrés de liberté 301, une butée sphérique par exemple. Le moyen de soutien 300 traverse de part en part la première cornière 15, en passant par un orifice 303 ménagé dans cette deuxième extrémité EX2, avant d'atteindre l'attache à trois degrés de liberté 301 solidarisée au moyeu 2.

L'attache à trois degrés de liberté 301 est dimensionnée pour minimiser la distance séparant l'axe de battement 302 du premier élément sustentateur 12 au premier axe longitudinal 13 de variation de pas de la première pale 10 correspondante afin que ledit axe de battement 302 et ledit premier axe longitudinal 13 soient sensiblement confondus.

On comprend que tous les éléments sustentateurs sont avantageusement munis d'une telle articulation.

Par conséquent, un élément sustentateur est lié mécaniquement à une unique pale.

Le pilote de l'hélicoptère ajuste alors la portance générée par les éléments sustentateurs 12, 22 afin de les faire battre.

En effet, chaque élément sustentateur est solidaire en rotation d'un premier axe longitudinal 13, 23 de variation de pas de la pale 10, 20 à laquelle il est lié.

Par conséquent, lorsque le premier élément sustentateur 12 bat, il tourne autour du premier axe longitudinal 13 de la première pale 10. Cet élément sustentateur 12 étant relié mécaniquement au premier moyen de fixation 11 de la première pale 10, cette première pale réalise à son tour un mouvement de rotation autour du premier axe longitudinal 13. Le pas de la première pale 10 est ainsi modifié.

De même, lorsque le deuxième élément sustentateur 22 bat, il entame une rotation autour du premier axe longitudinal 23 de la deuxième pale 20 et entraine avec lui cette deuxième pale 20 de manière à modifier son pas.

En outre, afin d'ajuster la portance de chaque élément sustentateur 12, 22, le pilote commande le pas de ces éléments sustentateurs, à l'aide de commandes usuelles non représentées sur les figures, de manière à faire tourner l'élément sustentateur 12, 22 concerné autour de son deuxième axe longitudinal 17, 27 de variation de pas.

Par suite, le rotor 1 comporte une biellette principale 40 par élément sustentateur servant à commander le pas de cet élément sustentateur.

Chaque biellette principale 40 est alors articulée à un point d'ancrage 41 déporté de l'élément sustentateur, plus précisément un point déporté du moyen de soutien 300 de l'articulation 16. Le point d'ancrage 41 est dit « déporté » dans la mesure où il ne se trouve pas sur le deuxième axe longitudinal 17.

Selon un premier mode de réalisation, le rotor 1 est équipé d'un plateau cyclique 50. Ce plateau cyclique 50 possède un plateau non tournant 52 lié à une zone non tournante de l'hélicoptère par un compas 53. Si le plateau non tournant 52 n'est pas entraîné en rotation par l'installation motrice de l'hélicoptère, il peut néanmoins être incliné par rapport au mât 5 du rotor 1, grâce à une rotule, via des servocommandes non représentées et activées par le pilote.

De plus, le plateau cyclique 50 est muni d'un plateau tournant 51 solidaire en rotation du mât 5. On note que le plateau cyclique 50 est d'un type usuel connu par l'homme du métier.

Dans ces conditions, les biellettes principales 40 sont selon ce premier mode de réalisation articulées d'une part sur le point d'ancrage 41 de l'élément sustentateur associé, et d'autre part sur le plateau tournant 51 qui les entraine en rotation.

On note que le point d'ancrage 41 est, selon ce premier mode de réalisation, déporté à l'aide d'un déport 42 sensiblement orthogonal à la direction Z selon laquelle le mât 5 est dirigé.

Selon le deuxième mode de réalisation décrit par la figure 2 qui constitue une amélioration du premier mode de réalisation, le rotor 1 comporte de plus un moyen de renvoi 60, en forme de L, par élément sustentateur.

Chaque moyen de renvoi 60, muni d'une première et d'une deuxième branches 61, 62 perpendiculaires entre elles, est fixé sur le moyeu 2 du rotor 1 par une tige 63 au niveau de la jonction des première et deuxième branches 61, 62. Chaque moyen de renvoi 60 est alors libre d'effectuer un mouvement rotatif autour de sa tige 63.

Chaque biellette principale 40 est articulée sur le point d'ancrage 41 de l'élément sustentateur associé et sur la première branche 61 d'un moyen de renvoi 60. La biellette principale 40 est ainsi sensiblement horizontale, dans le repère hélicoptère, et parallèle à la deuxième branche 62.

Contrairement au premier mode de réalisation, le point d'ancrage 41 est déporté à l'aide d'un déport 42 sensiblement parallèle à la direction Z selon laquelle le mât 5 est dirigé. Le déport 42 est alors sensiblement contenu dans un plan vertical contenant le deuxième axe longitudinal 17 de variation de pas de l'élément sustentateur 10.

De plus, le rotor 1 comporte une biellette secondaire 64 articulée d'une part sur la deuxième branche 62 et, d'autre part, au plateau tournant 51. La biellette secondaire est alors sensiblement verticale, dans le repère hélicoptère, et parallèle à la première branche 61.

Lorsque le pilote actionne ses commandes, le plateau tournant 51 s'incline et répercute son mouvement à la biellette secondaire 64. Cette biellette secondaire 64 exerce un effort sur la deuxième branche 62 du moyen de renvoi 60 qui tourne autour de sa tige 63. La biellette principale 40 est alors poussée ou tirée selon le cas ce qui permet de modifier le pas de l'élément sustentateur.

Selon la première forme du deuxième mode de réalisation représentée sur la figure 2, la première branche 61 sur laquelle est articulée la biellette principale 40 représente la branche du moyen de renvoi 60 la plus proche du fuselage de l'hélicoptère.

La biellette principale 40 est alors fixée sur la face externe F2 du moyen de renvoi dirigé vers l'élément sustentateur, alors que la biellette secondaire 64 est fixée sur la face interne F1 de ce moyen de renvoi 60 en regard du moyeu 2.

Par conséquent, les biellettes principale 40 et secondaire 64 ne risquent pas de s'entrechoquer.

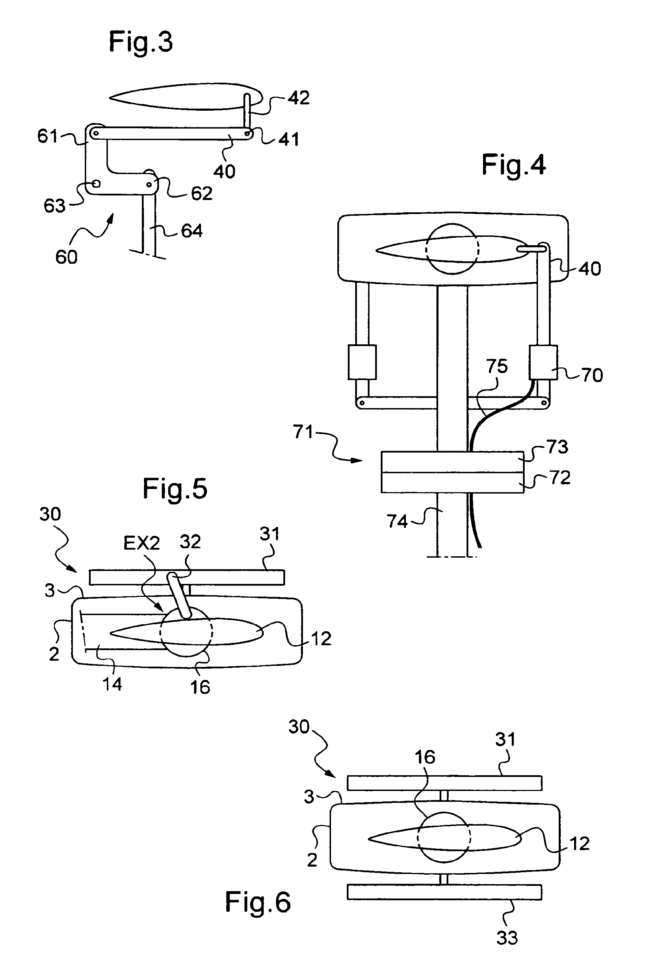

Selon la deuxième forme du deuxième mode de réalisation représentée sur la figure 3, la première branche 61 sur laquelle est articulée la biellette principale 40 représente la branche du moyen de renvoi 60 la plus éloignée du fuselage de l'hélicoptère.

Par suite, les biellettes principale 40 et secondaire 64 ne risquent pas de se croiser.

La figure 4 présente un troisième mode de réalisation de l'invention. Chaque biellette principale 40 est solidarisée à un actionneur 70, éventuellement de type piézoélectrique, apte à la tirer ou à la pousser. Chaque actionneur 70 est fixé par exemple au mât 5 du rotor par une bride prévue à cet effet.

Par ailleurs, l'hélicoptère comporte un collecteur électrique 71, d'un type connu, muni d'un élément non tournant 72 et d'un élément tournant 73 équipé de balais, ou équivalent, permettant la circulation d'un courant électrique.

L'élément tournant 73 du collecteur électrique 71 est alors relié par un câble électrique 75 à l'actionneur 70, l'élément non tournant 72 étant relié par un câble électrique 74 à une source d'alimentation électrique de l'hélicoptère, et éventuellement notamment aux commandes du pilote.

Le pilote peut donc ordonner la rétraction ou l'extension de l'actionneur pour faire varier le pas de l'élément sustentateur associé.

Il convient de préciser que l'utilisation d'un élément sustentateur pour faire varier le pas d'une pale permet de limiter les efforts de commande, par rapport aux dispositifs connus de l'art antérieur.

Ainsi, il devient possible d'utiliser un actionneur piézoélectrique pour le pilotage du pas collectif et du pas cyclique de l'hélicoptère. Cette constatation est surprenante dans la mesure où de tels actionneurs ne sont normalement pas adaptés à cet usage du fait des faibles déplacements qu'ils induisent.

Quel que soit le mode de réalisation, en référence aux figures 5 et 6, l'hélicoptère est avantageusement équipé d'un moyen de butée 30 des éléments sustentateurs pour limiter leur battement.

Ce moyen de butée 30 comporte une plaque supérieure 31 qui recouvre partiellement, ou totalement, le moyeu 2 du rotor 1. La plaque supérieure 31 est donc en regard de la partie supérieure 3 du moyeu 2 la plus éloignée du fuselage de l'hélicoptère.

Selon une première version de ce moyen de butée 30 schématisée sur la figure 5, le moyen de butée 30 est aussi muni d'un limiteur de course 32, un vérin par exemple, pour chaque élément sustentateur.

Chaque limiteur de course 32 est alors fixé sur la plaque supérieure 31 et sur la deuxième extrémité EX2, EX2' de la cornière 15, 25 correspondante de l'élément sustentateur 12 associé.

La course prédéterminée du limiteur de course limite ainsi avantageusement le battement de l'élément sustentateur 12.

Selon une deuxième version illustrée par la figure 6, le moyen de butée 30 comporte non pas un limiteur de course mais une plaque inférieure 33 en regard de la partie inférieure 4 du moyeu 2 la plus proche du fuselage de l'hélicoptère.

Les plaques supérieure et inférieure 31, 33 saillent du moyeu 2. Ainsi, lorsque le battement de la pale dépasse un certain seuil, la deuxième extrémité EX2, EX2' de la cornière 15, 25 correspondante de l'élément sustentateur entre en contact avec la plaque supérieure 31, ou la plaque inférieure 33, ce qui stoppe son mouvement.

Des éléments amortissants, une butée en élastomère par exemple, peuvent être agencés sur les plaques supérieure 31 et inférieure 33 pour que l'articulation ne soit pas endommagée par le choc résultant du contact.

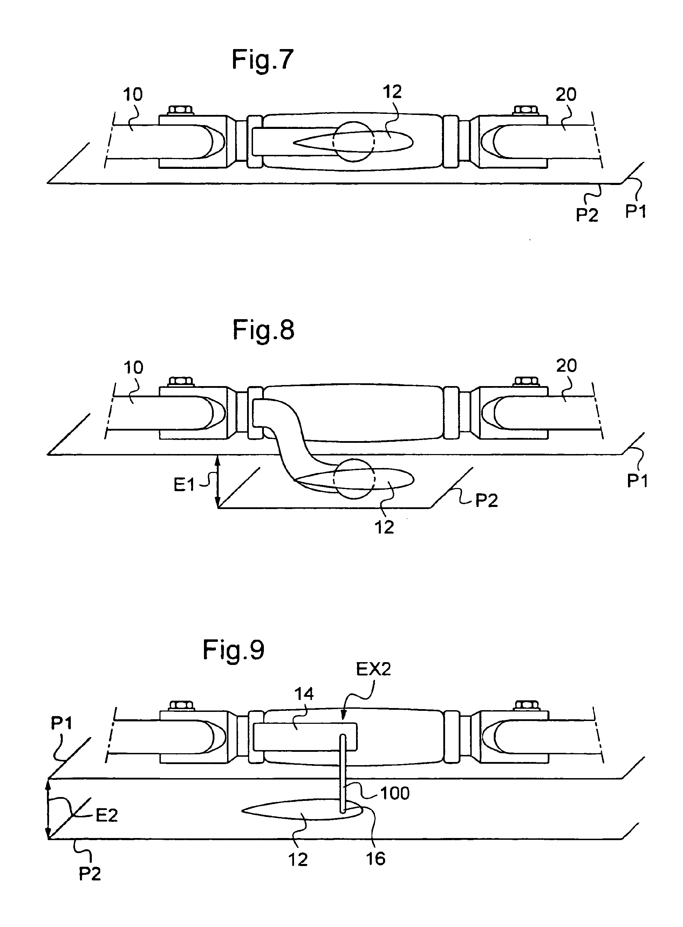

Par ailleurs, en référence aux figures 7 et 8, les pales 10, 20 sont toutes contenues dans un premier plan P1 lorsqu'elles ne battent pas. Le premier plan P1 contient donc les premiers axes longitudinaux 13, 23 de variation de pas des pales 10, 20.

De même, les éléments sustentateurs sont tous contenus dans un unique plan P2. Ainsi, le deuxième plan P2 contient les deuxièmes axes longitudinaux 17, 27 de variation de pas des éléments sustentateurs 12, 22.

Selon une première variante décrite par la figure 7, les premier et deuxième plans P1 et P2 sont confondus.

Toutefois, selon une deuxième variante schématisée sur la figure 8, ces premier et deuxième plans P1, P2 sont décalés l'un par rapport à l'autre, le premier plan P1 étant situé légèrement au dessus du deuxième plan P2.

Le décalage E1 existant entre les premier et deuxième plans P1, P2 est de l'ordre de l'épaisseur de l'élément sustentateur.

Enfin, selon la troisième variante décrite par la figure 9, le décalage E2 séparant les premier et deuxième plans P1, P2 est important, en étant de l'ordre de la corde de l'élément sustentateur.

Ainsi, une biellette intermédiaire 100 est agencée entre la deuxième extrémité EX2 de chaque cornière et l'articulation 16 de l'élément sustentateur associé 12.

On comprend que l'élément sustentateur 12 dessiné sur les figures 8 et 9 est de préférence soutenu par l'articulation 16 de cet élément sustentateur 12 en étant de plus fixé au mât du rotor par exemple.

Naturellement, la présente invention est sujette à de nombreuses variations quant à sa mise en oeuvre. Bien que plusieurs modes de réalisations aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Par exemple, les figures décrivent un rotor comportant deux pales et par suite deux éléments sustentateurs. Toutefois, l'invention est adaptable sur un hélicoptère comportant un nombre plus important de pales sans aucune difficulté.

De plus, les figures 1 et 2 montrent que la cornière liant mécaniquement un élément sustentateur à une pale correspondante est fixée par sa première extrémité au moyen de fixation de ladite pale.

Néanmoins, cette première extrémité de la cornière peut être solidarisée non pas au moyen de fixation mais à la pale elle-même, à un tronçon du pied de la pale par exemple, d'autant plus que le moyen de fixation peut être intégré à cette pale.

De manière plus générale, la cornière est fixée à la zone d'attache 200 de la pale au moyeu du rotor montrée sur la figure 1.

## Revendications

1. Hélicoptère muni d'un rotor principal (1) comportant au moins deux pales (10, 20), chaque pale (10, 20) étant pourvue d'un moyen de fixation (11, 21) à un moyeu (2) du rotor (1),
**caractérisé en ce qu'**il est muni d'un élément sustentateur (12, 22) par pale (10, 20), chaque élément sustentateur (12, 22) étant lié mécaniquement à une unique pale (10, 20) pour faire varier le pas de ladite unique pale (10, 20), chaque élément sustentateur (12, 22) étant solidaire en rotation de la pale (10, 20) à laquelle il est mécaniquement lié autour d'un premier axe longitudinal (13, 23) de variation de pas de ladite pale (10, 20).

2. Hélicoptère selon la revendication 1,
**caractérisé en ce que** chaque élément sustentateur (12, 22) est lié mécaniquement à une unique pale (10, 20) par une liaison mécanique (14, 24) indépendante du moyeu (2) du rotor (1).

3. Hélicoptère selon l'une quelconque des revendications précédentes,
**caractérisé en ce que**, chaque élément sustentateur (12, 22) étant lié mécaniquement à une unique pale (10, 20) par une liaison mécanique (14, 24), ladite liaison mécanique (14, 24) comporte une cornière (15, 25) dont une première extrémité (EX1) est solidarisée à une zone d'attache (200) de la pale (10), ledit élément sustentateur (12, 22) étant solidarisé en rotation autour de l'axe de battement dudit élément sustentateur à une deuxième extrémité (EX2) de ladite cornière (15, 25) via une articulation (16, 26) permettant à l'élément sustentateur (12, 22) d'effectuer un mouvement rotatif autour d'un deuxième axe longitudinal (17, 27) de variation de pas de l'élément sustentateur (12, 22).

4. Hélicoptère selon l'une quelconque des revendications 1 à 2,
**caractérisé en ce que**, chaque élément sustentateur (12, 22) étant lié mécaniquement à une unique pale (10, 20) par une liaison mécanique (14, 24), ladite liaison mécanique (14, 24) comporte une cornière (15, 25) dont une première extrémité (EX1) est solidarisée à une zone d'attache (200) de la pale (10), une deuxième extrémité (EX2, EX2') de chaque cornière (15, 25) étant fixée par une biellette intermédiaire (100) à l'élément sustentateur (12, 22) correspondant, plus précisément à l'articulation (16) permettant à l'élément sustentateur d'effectuer un mouvement rotatif autour d'un deuxième axe longitudinal de variation de pas de l'élément sustentateur.

5. Hélicoptère selon l'une quelconque des revendications 3 à 4,
**caractérisé en ce que**, ladite articulation (16, 26) de chaque élément sustentateur (12, 22) est alors pourvue d'un moyen de soutien (300) et d'une attache à trois degrés de liberté (301), ledit moyen de soutien (300) étant solidarisé à l'élément sustentateur correspondant et ladite attache à trois degrés de liberté (301) étant fixée à une unité tournante comportant le mât du rotor et le moyeu de ce rotor ainsi que le moyen de fixation (11, 21) de la pale (10, 20) au moyeu du rotor.

6. Hélicoptère selon l'une quelconque des revendications 3 à 5,
**caractérisé en ce que**, ladite zone d'attache (200) englobant le moyen de fixation (11, 21) de la pale (10) et un tronçon de cette pale, ladite première extrémité (EX1) est solidarisée audit moyen de fixation (11, 21).

7. Hélicoptère selon l'une quelconque des revendications 3 à 5,
**caractérisé en ce que**, ladite zone d'attache (200) englobant le moyen de fixation (11, 21) de la pale (10) et un tronçon de cette pale, ladite première extrémité (EX1) est solidarisée audit tronçon.

8. Hélicoptère selon l'une quelconque des revendications précédentes,
**caractérisé en ce que**, les pales (10, 20) étant contenues dans un premier plan (P1) lorsqu'elles ne battent pas, les éléments sustentateurs (12, 22) liés mécaniquement auxdites pales (10, 20) étant contenus dans un deuxième plan (P2) lorsqu'ils ne battent pas, lesdits premier et deuxième plans (P1, P2) sont confondus.

9. Hélicoptère selon l'une quelconque des revendications 1 à 7,
**caractérisé en ce que**, les pales (10, 20) étant contenues dans un premier plan (P1) lorsqu'elles ne battent pas, les éléments sustentateurs (12, 22) liés mécaniquement auxdites pales (10, 20) étant contenus dans un deuxième plan (P2) lorsqu'ils ne battent pas, lesdits premier et deuxième plans (P1, P2) sont parallèles entre eux.

10. Hélicoptère selon l'une quelconque des revendications précédentes,
**caractérisé en ce que**, ledit rotor (1) comporte un moyen de butée (30) pour limiter le battement de chaque élément sustentateur (12).

11. Hélicoptère selon la revendication 10,
**caractérisé en ce que**, ledit moyen de butée (30) est pourvu d'une plaque supérieure (31) qui recouvre au moins partiellement une partie supérieure (3) du moyeu (2) du rotor (1), ladite partie supérieure (3) étant située du côté du moyeu (2) opposé à un fuselage de l'hélicoptère.

12. Hélicoptère selon la revendication 11,
**caractérisé en ce que**, chaque élément sustentateur (12, 22) étant lié mécaniquement à une pale (10, 20) via successivement une articulation (16) et une liaison mécanique (14, 24), ledit moyen de butée (30) comporte un limiteur de course (32) par élément sustentateur (12, 22), chaque limiteur de course (32) étant agencé entre ladite plaque supérieure (31) et chaque articulation (16) pour limiter le battement de chaque élément sustentateur (12, 22).

13. Hélicoptère selon la revendication 11,
**caractérisé en ce que**, ledit moyen de butée (30) est pourvu d'une plaque inférieure (33) qui recouvre au moins partiellement une partie inférieure (4) du moyeu (2) du rotor (1), ladite partie inférieure (4) étant située du côté du moyeu (2) en regard du fuselage de l'hélicoptère.

14. Hélicoptère selon l'une quelconque des revendications précédentes,
**caractérisé en ce qu'**il comporte une biellette principale (40) par élément sustentateur (12, 22), chaque biellette principale (40) étant articulée sur un point d'ancrage (41) déporté d'un unique élément sustentateur (12, 22) pour commander le pas dudit unique élément sustentateur (12, 22) sur lequel la biellette principale (40) est articulée.

15. Hélicoptère selon la revendication 14,
**caractérisé en ce que**, ledit rotor (2) principal comportant un plateau cyclique (50) de commande de pas muni d'un plateau tournant (51) et d'un plateau non tournant (52), chaque biellette principale (40) est articulée sur ledit plateau tournant (51).

16. Hélicoptère selon la revendication 14,
**caractérisé en ce que**, ledit rotor (1) principal comportant un plateau cyclique (50) de commande de pas muni d'un plateau tournant (51) et d'un plateau non tournant (52), ladite biellette principale (40) est articulée sur une première branche (61) d'un moyen de renvoi (60) d'angle solidarisé au moyeu (2) du rotor (1), une deuxième branche (62) dudit moyen de renvoi (60) étant reliée au plateau tournant (51) par une bielle secondaire (64).

17. Hélicoptère selon la revendication 16,
**caractérisé en ce que**, l'hélicoptère comportant un actionneur (70) par biellette principale (40), chaque biellette principale (40) est commandée par un actionneur (70) alimenté électriquement via un collecteur électrique (71) agencé sur un mât (5) tournant du rotor (2).

18. Hélicoptère selon la revendication 17,
**caractérisé en ce que**, l'hélicoptère comportant un actionneur (70) par biellette principale (40), chaque biellette principale (40) est commandée par un actionneur (70) alimenté électriquement via un générateur électrique comportant un stator agencé à l'intérieur d'un mât (5) tournant du rotor (2), un organe tournant du générateur étant rigidement lié au mât (5).

19. Hélicoptère selon l'une quelconque des revendications 17 à 18,
**caractérisé en ce que**, ledit actionneur (70) est commandé par un moyen de transmission sans fil.

20. Hélicoptère selon l'une quelconque des revendications précédentes,
**caractérisé en ce que** chaque élément sustentateur (12, 22) est géré de manière indépendante, fonctionnellement et mécaniquement, de manière à faire varier individuellement le pas d'une unique pale.

21. Procédé pour faire varier le pas d'une pale (10, 20) d'un rotor d'hélicoptère comportant au moins deux pales,
**caractérisé en ce que**, un élément sustentateur (12, 22) étant uniquement lié à ladite pale (10, 20), on ajuste la portance générée par ledit élément sustentateur (12, 22) afin que cet élément sustentateur (12, 22) batte pour entraîner en rotation la pale (10, 20) à laquelle il est lié autour d'un premier axe longitudinal (13, 23) de variation de pas de ladite pale (10, 20), la portance dudit élément sustentateur (12, 22) étant ajustée en modifiant le pas de l'élément sustentateur (12, 22) et donc en faisant tourner ledit élément sustentateur (12, 22) autour d'un deuxième axe longitudinal (17, 27) de variation de pas dudit élément sustentateur (12, 22).

## Claims

1. Helicopter fitted with a main rotor (1) having at least two blades (10, 20), each blade (10, 20) being provided with means for attachment (11, 21) to a hub (2) of the rotor (1),
**characterised in that** it is provided with one lift element (12, 22) per blade (10, 20), each lift element (12, 22) being mechanically linked to a single blade (10, 20) to vary the pitch of said single blade (10, 20), each lift element (12, 22) being constrained to rotate with the blade (10, 20) to which it is mechanically linked about a first longitudinal axis (13, 23) for varying the pitch of said blade (10, 20).

2. Helicopter according to Claim 1,
**characterised in that** each lift element (12, 22) is mechanically linked to a single blade (10, 20) by a mechanical connection (14, 24) that is independent of the hub (2) of the rotor (1).

3. Helicopter according to either one of the preceding claims,
**characterised in that** each lift element (12, 22) is mechanically linked to a single blade (10, 20) by a mechanical connection (14, 24), said mechanical connection (14, 24) comprising a bent bar (15, 25) having a first end (EX1) secured to an attachment zone (200) of the blade (10), said lift element (12, 22) being constrained to rotate about the flapping axis of said lift element at a second end (EX2) of said bent bar (15, 25) via a hinge (16, 26) enabling the lift element (12, 22) to perform a rotating movement about a second longitudinal axis (17, 27) for varying the pitch of the lift element (12, 22).

4. Helicopter according to either one of Claims 1 to 2,
**characterised in that** each lift element (12, 22) is mechanically linked to a single blade (10, 20) by a mechanical connection (14, 24), said mechanical connection (14, 24) comprising a bent bar (15, 25) having a first end (EX1) secured to an attachment zone (200) of the blade (10), a second end (EX2, EX2') of each bent bar (15, 25) being attached by an intermediate link (100) to the corresponding lift element (12, 22), more precisely to the hinge (16) enabling the lift element to perform a rotating movement about a second longitudinal axis for varying the pitch of the lift element.

5. Helicopter according to either one of Claims 3 to 4,
**characterised in that** said hinge (16, 26) of each lift element (12, 22) is then provided with support means (300) and with an attachment (301) having three degrees of freedom, said support means (300) being secured to the corresponding lift element and said attachment (301) having three degrees of freedom being attached to a rotary unit comprising the mast and the hub of said rotor and also the means for attachment (11, 21) of the blade (10, 20) to the hub of the rotor.

6. Helicopter according to any one of Claims 3 to 5,
**characterised in that** said attachment zone (200) incorporates the means for attachment (11, 21) of the blade (10) and a segment of said blade, said first end (EX1) being secured to said means for attachment (11, 21).

7. Helicopter according to any of Claims 3 to 5,
**characterised in that** said attachment zone (200) incorporates the means for attachment (11, 21) of the blade (10) and a segment of said blade, said first end (EX1) being secured to said segment.

8. Helicopter according to any one of the preceding claims,
**characterised in that** the blades (10, 20) are contained in a first plane (P1) when they are not flapping, and the lift elements (12, 22) mechanically linked to said blades (10, 20) are contained in a second plane (P2) when they are not flapping, said first and second planes (P1, P2) coinciding.

9. Helicopter according to any one of Claims 1 to 7,
**characterised in that** the blades (10, 20) are contained in a first plane (P1) when they are not flapping, and the lift elements (12, 22) mechanically linked to said blades (10, 20) are contained in a second plane (P2) when they are not flapping, said first and second planes (P1, P2) being mutually parallel.

10. Helicopter according to any one of the preceding claims,
**characterised in that** said rotor (1) includes stop means (30) for limiting the flapping of each lift element (12).

11. Helicopter according to Claim 10,
**characterised in that** said stop means (30) is provided with a top plate (31) covering a top portion (3) of the hub (2) of the rotor (1), at least in part, said top portion (3) being situated on the side of the hub (2) that faces away from a fuselage of the helicopter.

12. Helicopter according to Claim 11,
**characterised in that** each lift element (12, 22) is mechanically linked to a blade (10, 20) successively via a hinge (16) and a mechanical connection (14, 24), said stop means (30) including one stroke limiter (32) per lift element (12, 22), each stroke limiter (32) being arranged between said top plate (31) and each hinge (16) to limit the flapping of each lift element (12, 22).

13. Helicopter according to Claim 11,
**characterised in that** said stop means (30) is provided with a bottom plate (33) covering a bottom portion (4) of the hub (2) of the rotor (1), at least in part, said bottom portion (4) being situated on the side of the hub (2) that faces the fuselage of the helicopter.

14. Helicopter according to any one of the preceding claims,
**characterised in that** it includes one main rod (40) per lift element (12, 22), each main rod (40) being hinged to an offset anchor point (41) of a single lift element (12, 22) to control the pitch of said single lift element (12, 22) to which the main rod (40) is hinged.

15. Helicopter according to Claim 14,
**characterised in that** said main rotor (2) [sic] includes a pitch control swashplate (50) fitted with a rotary plate (51) and a non-rotary plate (52), and each main rod (40) is hinged to said rotary plate (51).

16. Helicopter according to Claim 14,
**characterised in that** said main rotor (1) includes a pitch control swashplate (50) fitted with a rotary plate (51) and a non-rotary plate (52), and said main rod (40) is hinged to a first branch (61) of a bell crank (60) secured to the hub (2) of the rotor (1), a second branch (62) of said bell crank (60) being connected to the rotary plate (51) by a secondary link (64).

17. Helicopter according to Claim 16,
**characterised in that** the helicopter includes one actuator (70) per main rod (40), and each main rod (40) is controlled by an actuator (70) that is electrically powered via an electrical collector (71) arranged on a rotary mast (5) of the rotor (2) [sic].

18. Helicopter according to Claim 17,
**characterised in that** the helicopter includes one actuator (70) per main rod (40), and each main rod (40) is controlled by an actuator (70) electrically powered via an electrical generator comprising a stator arranged inside a rotary mast (5) of the rotor (2) [sic], a rotating member of the generator being rigidly linked to the mast (5).

19. Helicopter according to either one of Claims 17 to 18,
**characterised in that** said actuator (70) is controlled by wireless transmission means.

20. Helicopter according to any one of the preceding claims,
**characterised in that** each lift element (12, 22) is managed in a functionally and mechanically independent manner so as to vary the pitch of a single blade individually.

21. Method of varying the pitch of a blade (10, 20) of a helicopter rotor having at least two blades,
**characterised in that** said blade (10, 20) has a lift element (12, 22) that is linked solely thereto, and the lift generated by said lift element (12, 22) is adjusted so that the lift element (12, 22) flaps to cause the blade (10, 20) to which it is linked to rotate about a first longitudinal axis (13, 23) for varying the pitch of said blade (10, 20), the lift of said lift element (12, 22) being adjusted by modifying the pitch of the lift element (12, 22) and thus by causing said lift element (12, 22) to turn about a second longitudinal axis (17, 27) for varying the pitch of said lift element (12, 22).

## Patentansprüche

1. Helikopter mit einem Hauptrotor (1), der mindestens zwei Rotorblätter (10, 20) aufweist, wobei jedes Rotorblatt (10, 20) mit einem Mittel (11, 21) zur Befestigung an einer Nabe (2) des Rotors (1) versehen ist,
**dadurch gekennzeichnet, dass** der Hauptrotor (1) mit einem Auftriebselement (12, 22) pro Rotorblatt (10, 20) versehen ist, wobei jedes Auftriebselement (12, 22) mechanisch mit einem einzigen Rotorblatt (10, 20) verbunden ist, um den Anstellwinkel dieses einzigen Rotorblatts (10, 20) zu verändern, wobei jedes Auftriebselement (12, 22) drehfest bezüglich einer ersten Längsachse (13, 23) zur Veränderung des Anstellwinkels des Rotorblattes (10, 20), mit dem es mechanisch verbunden ist, befestigt ist.

2. Helikopter nach Anspruch 1,
**dadurch gekennzeichnet, dass** jedes Auftriebselement (12, 22) unabhängig von der Nabe (2) des Rotors (1) mechanisch mit einem einzigen Rotorblatt (10, 20) durch eine mechanische Verbindung (14, 24) verbunden ist.

3. Helikopter nach einem der vorstehenden Ansprüche,
**dadurch gekennzeichnet, dass** bei einer mechanischen Verbindung jedes Auftriebselements (12, 22) mit einem einzigen Rotorblatt (10, 20) durch eine mechanische Verbindung (14, 24) diese mechanische Verbindung (14, 24) einen Anschlusswinkel (15, 25) aufweist, von dem ein erstes Ende (EX1) mit einem Befestigungsbereich (200) des Rotorblatts (10) fest verbunden ist, wobei das Auftriebselement (12, 22) drehfest um die Schwenkachse des Auftriebselements an einem zweiten Ende (EX2) des Anschlusswinkels (15, 25) über ein Gelenk (16, 26) verbunden ist, welches es dem Auftriebselement (12, 22) ermöglicht, eine Drehbewegung um eine zweite Längsachse (17, 27) zur Veränderung des Anstellwinkels des Auftriebselements (12, 22) auszuführen.

4. Helikopter nach einem der Ansprüche 1 oder 2,
**dadurch gekennzeichnet, dass** bei mechanischer Befestigung eines jeden Auftriebselements (12, 22) an einem einzigen Rotorblatt (10, 20) über eine mechanische Verbindung (14, 24) die mechanische Verbindung (14, 24) einen Anschlusswinkel (15, 25) aufweist, dessen eines erstes Ende (EX1) mit einem Befestigungsbereich (200) des Rotorblatts (10) fest verbunden ist und ein zweites Ende (EX2, EX2') eines jeden Anschlusswinkels (15, 25) über ein Zwischenschaltgestänge (10) an dem entsprechenden Auftriebselement (12, 22) befestigt ist, genauer gesagt an dem Gelenk (16), welches es dem Auftriebselement ermöglicht, eine Drehbewegung um eine zweite Längsachse zur Veränderung des Anstellwinkels des Auftriebselements durchzuführen.

5. Helikopter nach einem der Ansprüche 3 oder 4,
**dadurch gekennzeichnet, dass** das Gelenk (16, 26) eines jeden Auftriebselements (12, 22) mit einem Stützmittel (300) und einer Befestigung mit drei Freiheitsgraden (301) versehen ist, wobei das Stützmittel (300) an dem entsprechenden Auf triebselement befestigt ist und die Befestigung mit drei Freiheitsgraden (301) an einer sich drehenden Einheit befestigt ist, die die Rotorwelle und die Nabe dieses Rotors sowie das Befestigungsmittel (11, 21) des Rotorblatts (10, 20) an der Nabe des Rotors umfasst.

6. Helikopter nach einem der Ansprüche 3 bis 5,
**dadurch gekennzeichnet, dass** der Befestigungsbereich (200) das Befestigungsmittel (11, 21) des Rotorblatts (10) und ein Teilstück dieses Rotorblattes umfasst, wobei das erste Ende (EX1) mit dem Befestigungsmittel (11, 21) fest verbunden ist.

7. Helikopter nach einem der Ansprüche 3 bis 5,
**dadurch gekennzeichnet, dass**, wenn der Befestigungsbereich (200) das Befestigungsmittel (11, 21) des Rotorblatts (10) und ein Teilstück dieses Rotorblattes umfasst, das erste Ende (EX1) mit dem Teilstück fest verbunden ist.

8. Helikopter nach einem der vorstehenden Ansprüche,
**dadurch gekennzeichnet, dass**, wenn die Rotorblätter (10, 20) in einer ersten Ebene (P1) liegen, während sie nicht schlagen, die Auftriebselemente (12, 22), die mechanisch mit den Rotorblättern (10, 20) verbunden sind, in einer zweiten Ebene (P2) liegen, während sie nicht schlagen, wobei die ersten und zweiten Ebenen (P1, P2) miteinander verschmolzen sind.

9. Helikopter nach einem der Ansprüche 1 bis 7,
**dadurch gekennzeichnet, dass**, wenn die Rotorblätter (10, 20) in einer ersten Ebene (P1) liegen, während sie nicht schlagen, die Auftriebselemente (12, 22), die mechanisch mit den Rotorblättern (10, 20) verbunden sind, in einer zweiten Ebene (P2) liegen, während sie nicht schlagen, wobei die ersten und zweiten Ebenen (P1, P2) parallel zueinander sind.

10. Helikopter nach einem der vorstehenden Ansprüche,
**dadurch gekennzeichnet, dass** der Rotor (1) ein Anschlagsmittel (30) aufweist, um das Schlagen eines jeden Auftriebselements (12) zu begrenzen.

11. Helikopter nach Anspruch 10,
**dadurch gekennzeichnet, dass** das Anschlagsmittel (30) mit einer oberen Platte (31) versehen ist, die mindestens teilweise einen oberen Teil (3) der Nabe (2) des Rotors (1) abdeckt, wobei der obere Bereich (3) auf der Seite der Nabe (2) gelegen ist, der dem Rumpf des Helikopters gegenüberliegt.

12. Helikopter nach Anspruch 11,
**dadurch gekennzeichnet, dass** jedes Auftriebselement (12, 22) mechanisch mit einem Rotorblatt (10, 20) über eine Aufeinanderfolge eines Gelenkes (16) und einer mechanischen Verbindung (14, 24) verbunden ist, wobei das Anschlagsmittel (30) einen Wegbegrenzer (32) pro Auftriebselement (12, 22) aufweist, und jeder Wegbegrenzer (32) zwischen der oberen Platte (31) und jedem Gelenk (16) angeordnet ist, um das Schlagen jedes Auftriebselements (12, 22) zu begrenzen.

13. Helikopter nach Anspruch 11,
**dadurch gekennzeichnet, dass** das Anschlagsmittel (30) mit einer unteren Platte (33) versehen ist, die zumindest teilweise einen unteren Teil (4) der Nabe (2) des Rotors (1) abdeckt, wobei der untere Teil (4) auf der Seiten der Nabe (2) gegenüber dem Rumpf des Helikopters gelegen ist.

14. Helikopter nach einem der vorstehenden Ansprüche,
**gekennzeichnet durch** ein Hauptschaltgestänge (40) pro Auftriebselement (12, 22), wobei jedes Hauptschaltgestänge (40) an einem versetzten Verankerungspunkt (41) eines einzigen Auftriebselements (12, 22) angelenkt ist, um den Anstellwinkel des einzigen Auftriebselements (12, 22), an dem das Hauptschaltgestänge (40) angelenkt ist, zu steuern.

15. Helikopter nach Anspruch 14,
**dadurch gekennzeichnet, dass**, wenn der Hauptrotor (1) eine Taumelscheibe (50) zur Steuerung des Anstellwinkels aufweist und mit einer sich drehenden Scheibe (51) und einer sich nicht drehenden Scheibe (52) versehen ist, jedes Hauptschaltgestänge (40) auf der sich drehenden Scheibe (51) angelenkt ist.

16. Helikopter nach Anspruch 14,
**dadurch gekennzeichnet, dass**, wenn der Hauptrotor (1) eine Taumelscheibe (50) zur Steuerung des Anstellwinkels aufweist, die mit einer sich drehenden Scheibe (51) und einer sich nicht drehenden Scheibe (52) versehen ist, das Hauptschaltgestänge (40) an einem ersten Arm (61) eines Eckumlenkungsmittels (60) angelenkt ist, welches mit der Nabe (2) des Rotors (1) fest verbunden ist, und wobei ein zweiter Arm (62) dieses Eckumlenkungsmittels (60) über ein sekundäres Schaltgestänge (64) mit der sich drehenden Scheibe (51) verbunden ist.

17. Helikopter nach Anspruch 16,
**dadurch gekennzeichnet, dass**, wenn der Helikopter ein Stellorgan (70) mit Hauptschaltgestänge (40) aufweist, jedes Hauptschaltgestänge (40) durch ein Stellorgan (70) gesteuert wird, welches elektrisch über einen elektrischen Sammler (71) gespeist wird, der auf einer sich drehenden Welle (5) des Rotors (1) angeordnet ist.

18. Helikopter nach Anspruch 17,
**dadurch gekennzeichnet, dass**, wenn der Helikopter ein Stellorgan (70) mit Hauptschaltgestänge (40) aufweist, jedes Hauptschaltgestänge (40) durch ein Stellorgan (70) gesteuert wird, welches elektrisch über einen Stromgenerator gespeist wird, der einen Stator aufweist, der im Inneren einer sich drehenden Welle (5) des Rotors (1) angeordnet ist, wobei ein sich drehendes Organ des Generators fest mit der Welle (5) verbunden ist.

19. Helikopter nach einem der Ansprüche 17 oder 18,
**dadurch gekennzeichnet, dass** das Stellorgan (70) durch ein drahtloses Übertragungsmittel gesteuert wird.

20. Helikopter nach einem der vorstehenden Ansprüche, **dadurch gekennzeichnet, dass** jedes Auftriebselement (12, 22) funktionell und mechanisch unabhängig gesteuert wird, derart, dass der Anstellwinkel eines einzelnen Rotorblattes individuell verstellt werden kann.

21. Verfahren zum Verstellen des Anstellwinkels eines Rotorblatts (10, 20) eines Rotors eines Helikopters, der mindestens zwei Rotorblätter aufweist,
**dadurch gekennzeichnet, dass** bei einem Auftriebselement (12, 22), welches ausschließlich mit dem Rotorblatt (10, 20) verbunden ist, der von dem Auftriebselement (12, 22) erzeugte Auftrieb eingestellt wird, um zu bewirken, dass dieses Auf triebselement (12, 22) schlägt, um das Rotorblatt (10, 20), mit welchem es verbunden ist, zu einer Drehung um eine erste Längsachse (13, 23) zur Verstellung des Anstellwinkels dieses Rotorblatts (10, 20) anzutreiben, wobei der Auftrieb des Auftriebselements (12, 22) eingestellt wird, indem der Anstellwinkel des Auftriebselements (12, 22) verändert wird, und somit das Auftriebselement (12, 22) in eine Drehbewegung um eine zweite Längsachse (17, 27) versetzt wird zur Veränderung des Anstellwinkels des Auftriebselements (12, 22).
